**Europäisches Patentamt**

**European Patent Office**

**Office européen des brevets**

(19)

(11) Numéro de publication: **0 100 692 B1**

## FASCICULE DE BREVET EUROPEEN

(12)

(45) Date de publication du fascicule du brevet:
**17.09.86**

(51) Int. Cl.⁴: **F 16 L 59/16**, F 23 J 13/02

(21) Numéro de dépôt: **83401248.6**

(22) Date de dépôt: **16.06.83**

(54) **Dispositif de raccordement de tubages de cheminée.**

(30) Priorité: **18.06.82 FR 8210838**

(43) Date de publication de la demande:
**15.02.84 Bulletin 84/7**

(45) Mention de la délivrance du brevet:
**17.09.86 Bulletin 86/38**

(84) Etats contractants désignés:
**BE DE FR GB IT NL**

(56) Documents cités:
**FR - A - 1 577 032**
**FR - A - 2 490 775**
**US - A - 2 033 534**

(73) Titulaire: **ETABLISSEMENTS POUJOULAT S.A. Société anonyme dite:, Saint-Symphorien, F-79270 Frontenay Rohan-Rohan (FR)**

(72) Inventeur: **Nimal, Gérard, 65 Rue du Lac, F-79000 Chauray (FR)**

(74) Mandataire: **Phélip, Bruno et al, c/o Cabinet Harlé & Phélip 21, rue de la Rochefoucauld, F-75009 Paris (FR)**

## Description

La présente invention concerne un dispositif de raccordement de tubages de cheminées. Plus précisément, la présente invention concerne le domaine des conduits de fumées, tant en évacuation de gaz brûlés que d'émanations de gaz toxiques ou chargés de vapeurs nocives.

On connaît des dispositifs de ce genre formées par des éléments de conduit en tôle, appelés tubages ayant une extrémité mâle et une extrémité femelle et raccordés entre eux par un montage du genre baïonnette à assemblage par rotation d'un quart de tour, l'ensemble étant maintenu par collier. De tels dispositifs permettent que des déviations très faibles des éléments les uns par rapport aux autres. D'autres conduits tôle, maintenus entre eux par un jonc d'assemblage seulement, n'ont pas la possibilité de retenir dans le tube intérieur les condensations formées par le refroidissement des gaz brûlés. On connaît également les boisseaux en pouzzolane qui s'emboîtent entre eux, pour limiter les sorties de condensats, mais leur structure plus ou moins poreuse n'évite pas complètement le passage du «bistre» à travers les joints de liaison.

Le document FR-A-1 577 032 décrit un dispositif de liaison entre deux éléments de tubage, un premier élément comprenant un tuyau intérieur, un tuyau extérieur coaxial au tuyau intérieur, et un embouti mâle qui a une forme générale de couronne, cet embouti mâle étant placé à l'extrémité haute dudit premier élément et entre les tuyaux extérieur et intérieur; un second élément comprenant deux tuyaux intérieur, et extérieur, et un embouti femelle qui a une forme générale de couronne, est placé à l'extrémité basse dudit second élément entre les tuyaux extérieur et intérieur et est conçu pour coopérer avec l'embouti mâle du premier élément, cet embouti femelle ayant une concavité d'ensemble tournée vers le bas et comportant sur ses bords intérieur et extérieur des parties faisant un angle faible avec l'axe du tubage, et étant serti sur le bord inférieur du tuyau extérieur. Ce document prévoit que la pièce annulaire qui constitue l'embouti femelle comporte une bordure périphérique intérieure espacée du tuyau intérieur. Le but de cet espacement est de permettre la dilatation du tuyau intérieur.

Cette disposition présente cependant le désavantage que le bord du tuyau intérieur peut facilement être déformé lors du transport, des manutentions ou du montage, d'où des risques de fonctionnement défectueux. Il est possible de remédier en partie à cet inconvénient en prévoyant, comme indiqué à la figure 1 de ce document, que le tuyau intérieur est replié vers le haut, ce qui augmente sa raideur. Cette solution a pour inconvénient de constituer un piège pour les produits de condensation, ce qui est à éviter.

La présente invention a pour but de remédier à ces inconvénients et en particulier à fournir des tubes résistants aux chocs, simples de fabrication, et permettant d'éviter les infiltrations de condensations entre deux tubes raccordés, même si ces tubes sont inclinés à 45°.

Ce résultat est obtenu selon l'invention en prévoyant, un dispositif du type indiqué plus haut et caractérisé en ce que ledit embouti femelle est soudé sur le tuyau intérieur, et présente une souplesse suffisante pour absorber la dilatation du tuyau intérieur.

Des circulations parasites de fumées à travers la masse isolante sont également évitées du fait que la liaison entre l'embouti femelle et le tube intérieur est étanche.

Suivant des modalités préférées:

le bord inférieur du tuyau intérieur présente un repli de raidissage tourné vers l'extérieur du tubage, et que l'embouti femelle est soudé sur le tuyau intérieur au niveau de ce repli.

— L'embouti mâle comporte une partie externe à concavité tournée vers le haut et une partie interne à concavité tournée vers le bas, ces deux parties étant d'importance analogue, ladite partie interne venant constituer un joint avec l'embouti femelle, alors que, dans la région de ladite partie externe, l'embouti mâle n'est pas parallèle à l'embouti femelle, ce qui entraîne la formation d'une chambre de décantation et condensation lors de l'assemblage.

— Le bord extérieur de ladite partie externe fait avec l'axe du tubage un angle inférieur à l'inclinaison prévue pour le tubage à l'utilisation.

L'invention, ainsi que des modalités particulières de celle-ci, va être exposée plus en détail à l'aide d'un exemple pratique, non limitatif, illustré aux dessins, parmi lesquels

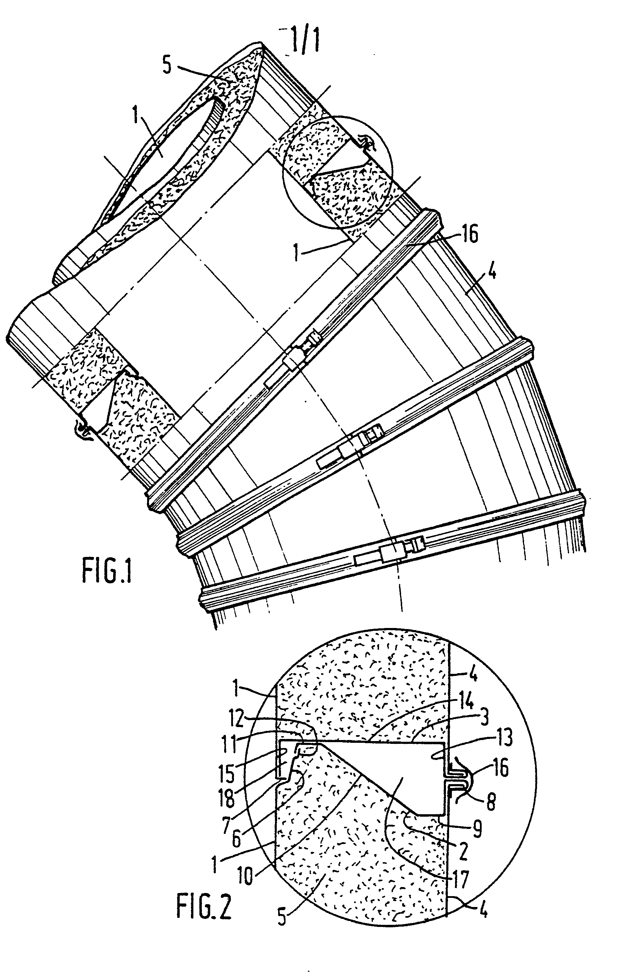

Fig. 1 est une vue de côté, partiellement arrachée d'une section de cheminée comportant des dispositifs selon l'invention, et

Fig. 2 est une vue partielle, agrandie, d'une partie d'un de ces dispositifs.

La section de cheminée décrite aux figures est une partie coudée avec une pente maximale de 45° par rapport à l'horizontale, construite par assemblage de plusieurs éléments, ou tubage, de forme cylindrique.

Chaque élément comprend:

— un tuyau intérieur 1, un matériau pouvant résister aux fumées, tel que de la tôle d'acier inoxydable, de forme cylindrique, évasé en partie supérieure,

— un embouti mâle 2, qui occupe l'extrémité haute de l'élément, et a une forme générale de couronne,

— un embouti femelle 3, qui occupe l'extrémité basse de l'élément, a également une forme générale de couronne, et est conçu pour coopérer avec l'embouti mâle de l'élément qui se trouve immédiatement au-dessous.

— un tuyau extérieur 4 et coaxial au tuyau intérieur, cylindrique, par exemple en tôle, pourvu de moyens pour l'accrochage des éléments entre eux,

— une masse isolante (5) par exemple en laine de roche, qui est emprisonnée entre les tuyaux extérieur et intérieur et entre les emboutis mâles et femelle.

L'élément intérieur 1 se termine, en partie haute, par une partie évasée 6, qui pour sa plus grande part a la forme d'un tronc de cône dont l'angle avec l'axe est largement inférieur à l'inclinaison maximale prévue pour l'élément. Dans le cas décrit ici, la pente maximale de la cheminée est de 45°, et l'angle de la partie en évasée avec l'axe est de 25° environ. Ainsi l'écoulement de produits de condensation ou autres vers l'intérieur de la jonction est rendue impossible. En partie basse, l'élément intérieur comporte une partie 7 repliée vers l'extérieur de la cheminée et destinée à augmenter sa raideur.

L'embouti mâle 2 est serti sur le bord du tuyau extérieur 4 en formant un bourrelet 8. Sa section montre, à partir du tuyau 4, d'abord une partie creuse 9, qui pénètre dans l'espace entre les tuyaux intérieur et extérieur, le bord externe de cette partie creuse étant à peu près parallèle au tuyau extérieur 4, puis une partie tronconique 10, avec évasement vers le bas, et enfin une partie en saillie et à concavité vers le bas 11, qui vient coiffer l'extrémité 12 de la partie conique 6 du tuyau intérieur.

L'embouti femelle 3 est serti lui aussi sur le bord du tuyau extérieur 4, a son extrémité opposée à celle où est sertie l'embouti mâle. Sa section montre, à partir du tuyau 4, d'abord une partie 13 à peu près parallèle à celui-ci et dirigée vers l'espace compris entre les tuyaux extérieur et intérieur, puis une partie sensiblement plane 14, et enfin une partie sensiblement parallèle au tuyau intérieur 1 et qui se termine par une soudure ou autre jonction 15 située sensiblement sur le bord inférieur 7 du tuyau intérieur 1.

Les bords de deux tuyaux extérieurs 2 adjacents, qui sont sertis avec les emboutis correspondants, font saillie vers l'extérieur et sont maintenus ensemble par un collier 16, qui les immobilise.

La partie à concavité tournée vers le bas 11 de l'embouti mâle fait saillie vers le haut, au-delà du plan des bords des tuyaux 1 et 4, jusqu'à venir sensiblement au contact de la partie plane 14 de l'embouti femelle de l'élément placé immédiatement au dessus.

Le fait que la jonction entre le tuyau intérieur et l'embouti mâle n'est pas une liaison étanche permet d'éviter que l'espace intérieur occupe par la masse isolante 5 se mette en surpression. Toutefois, lors du refroidissement, le passage tend à se refermer par l'effet de la baisse de pression, ce qui limite l'entrée de vapeurs condensables dans la masse isolante. D'autre part, le déplacement relatif des tuyaux intérieur et extérieur sous l'effet des dilatations est possible sans difficulté.

Au niveau de l'embouti femelle, le même déplacement relatif sous l'effet des dilatations est absorbée par l'effet de la forme générale concave de cet embouti, dont les parties cylindriques 13 et 15 ont une grande flexibilité.

La forme particulière des emboutis aboutit en outre à deux résultats: une chambre de décantation 17 est constituée au-dessus de la partie creuse 9, à concavité tournée vers le haut, entre celle-ci et l'embouti femelle qui a une concavité générale tournée en sens inverse de l'élément voisin. Dans cette chambre peuvent se rassembler les poussières et matières condensables qui auraient pu passer à travers le contact non étanche entre les deux emboutis adjacents, au niveau de la partie en saillie 11 de l'embouti mâle. Ces poussières et condensats ne peuvent atteindre le joint serti à cause de la forte pente du bord extérieur de la partie creuse. L'angle que doit faire pour cela ce bord de la partie creuse avec l'axe de l'élément doit être inférieur à l'inclinaison maximale prévue pour la cheminée. Sur la figure on a représenté un angle de valeur nulle, un angle de 25° par exemple pourrait convenir si l'angle maximum est de 45°.

On notera qu'une autre chambre de décantation et condensation 18, de plus petites dimensions est formée entre le bord évasé 6 de la partie haute du bord intérieur 2, la partie intérieure 15, parallèle à l'axe de l'embouti femelle, et la partie plane 14 de ce dernier. Les poussières et produits de condensation de la chambre 18 retournent à l'intérieur de la cheminée.

Le dispositif object de l'invention peut être utilisé dans tous les cas de sortie de fumées, et en particulier, dans les cas de fortes condensations où ce système offre une bonne sécurité. Il peut aussi être utilisé pour des gaz autre que les fumées, mais relativement chargés en produits nocifs ou agressifs.

**Revendications**

1. Dispositif de liaison entre deux éléments de tubage, un premier élément comprenant un tuyau intérieur (1), un tuyau extérieur (4) coaxial au tuyau intérieur, et un embouti mâle (2) qui a une forme générale de couronne, cet embouti mâle étant placé à l'extrémité haute dudit premier élément et entre les tuyaux extérieur et intérieur; un second élément comprenant deux tuyaux, intérieur (1) et extérieur (4), et un embouti femelle (3) qui a une forme générale de couronne, est placé à l'extrémité basse dudit second élément entre les tuyaux extérieur et intérieur et est conçu pour coopérer avec l'embouti mâle du premier élément, cet embouti femelle ayant une concavité d'ensemble tournée vers le bas et comportant sur ses bords intérieur et extérieur des parties faisant un angle faible avec l'axe du tubage, et étant serti sur le bord inférieur du tuyaux extérieur (4), caractérisé en ce que ledit embouti femelle (3) est soudé sur le tuyau intérieur (1), et présente une souplesse suffisante pour absorber la dilatation du tuyau intérieur.

2. Dispositif selon la revendication 1, dans lequel le bord inférieur du tuyau intérieur présente un repli de raidissage, caractérisé en ce que ce repli (7) est tourné vers l'extérieur du tubage, et en ce que l'embouti femelle est soudé sur le tuyau intérieur au niveau de ce repli.

3. Dispositif selon l'une des revendications 1 ou 2, dans lequel l'embouti mâle comporte une partie externe à concavité tournée vers le haut (9) et une partie interne à concavité tournée vers le bas (11), la dite partie interne venant constituer un joint avec l'embouti femelle, caractérisé en ce que deux parties sont d'importance analogue, et en ce que, dans la région de ladite partie externe, l'embouti mâle n'est pas parallèle à l'embouti femelle, ce qui entraîne la formation d'une chambre de décantation et condensation (17) 5 lors de l'assemblage.

4. Dispositif selon la revendication 3, caractérisé en ce que le bord extérieur de ladite partie externe (9) fait avec l'axe du tubage un angle inférieur à l'inclinaison prévue pour le 10 tubage à l'utilisation.

## Patentansprüche

1. Verbindungsvorrichtung zwischen zwei Verrohrungselementen, deren erstes Element ein Innenrohr (1), ein zu dem Innenrohr koaxiales Aussenrohr (4) und einen männlichen, im allgemeinen kronenförmigen Tiefziehring (2) umfasst, der an dem oberen Ende des ersten Elements und zwischen dem Aussenrohr und dem Innenrohr angeordnet ist; deren zweites Element zwei Rohre, nämlich ein Innenrohr (1) und ein Aussenrohr (4), und einen weiblichen, im allgemeinen kronenförmigen Tiefziehring (3) umfasst, der an dem unteren Ende des zweiten Elements zwischen dem Aussenrohr und dem Innenrohr angeordnet ist, zum Eingriff in den männlichen Tiefziehring ausgebildet ist, eine nach unten gerichtete Gesamtvertiefung hat und an dessen Innenrand und Aussenrand Abschnitte aufweist, welche mit der Achse der Verrohrung einen kleinen Winkel bilden, und der auf den unteren Rand des Aussenrohrs (4) gefalzt ist, dadurch gekennzeichnet, dass der weibliche Tiefziehring (3) auf das Innenrohr (1) aufgeschweisst ist und genügend nachgiebig ist, um die Ausweitung des Innenrohrs aufzunehmen.

2. Vorrichtung nach Anspruch 1, bei welcher der Innenrand des Innenrohrs einen Versteifungseinschlag bildet, dadurch gekennzeichnet, dass dieser Einschlag (7) zum Äusseren der Verrohrung gerichtet ist und dass der weibliche Tiefziehring auf das Innenrohr in Höhe dieses Einschlags aufgeschweisst ist.

3. Vorrichtung nach einem der Ansprüche 1 oder 2, bei der der männliche Tiefziehring einen Aussenabschnitt mit einer nach oben gerichteten Ausnehmung (9) und einen Innenabschnitt mit einer nach unten gerichteten Ausnehmung (11) aufweist, welcher letztere Abschnitt eine Verbindung mit dem weiblichen Tiefziehring bildet, dadurch gekennzeichnet, dass die beiden Abschnitte analoge Bedeutung haben und dadurch, dass in dem Bereich des Aussenabschnitts der männliche Tiefziehring nicht parallel zu dem weiblichen Abschnitt verläuft, wodurch eine Abscheidungs- und Kondensationskammer (17) nach dem Zusammensetzen gebildet wird.

4. Vorrichtung nach Anspruch 3, dadurch gekennzeichnet, dass der Aussenrand des Aussenabschnitts (9) mit der Achse der Verrohrung einen Winkel bildet, der kleiner als die für die Verrohrung in Gebrauchslage vorgesehene Neigung ist.

## Claims

1. Device for connecting together two tubing components, a first component comprising an interior tube (1), an exterior tube (4) coaxial with the interior tube and a male coupling (2) which has the general shape of a crown, this male coupling being placed at the upper extremity of the said first component and between the exterior and interior tubes; a second component comprising two tubes, an interior one (1) and an exterior one (4), and a female coupling (3) which has the general shape of a crown, is placed at the lower extremity of the said second component between the exterior and interior tubes and is designed to cooperate with the male coupling of the first component, this female coupling having an overall concavity turned towards the base and including, on its interior and exterior edges, parts forming a small angle with the axis of the tubing, and being crimped onto the lower edge of the exterior tube (4), characterized in that the said female coupling (3) is welded onto the interior tube (1) and exhibits sufficient flexibility to absorb the expansion of the interior tube.

2. Device according to Claim 1, wherein the lower edge of the interior tube exhibits a strengthening fold, characterized in that this fold (7) is turned towards the exterior of the tubing, and in that the female coupling is welded to the interior tube at the level of this fold.

3. Device according to either of Claims 1 or 2, wherein the male coupling includes an exterior part having a concavity turned towards the top (9) and an interior part having a concavity turned towards the base (11), the said interior part forming a joint with the female coupling, characterized in that two parts are of similar size, and in that, in the region of the said exterior part, the male coupling is not parallel to the female coupling, which involves the formation of a settlement and condensation chamber (17) in the course of assembly.

4. Device according to Claim 3, characterized in that the exterior edge of the said exterior part (9) makes with the axis of the tubing an angle less than the inclination intended for the said tubing in use.

1/1

**FIG.1**

**FIG.2**